# EUROPÄISCHE PATENTANMELDUNG

(11) **EP 3 428 127 A1**
(43) Veröffentlichungstag der Anmeldung: **16.01.2019**
(21) Anmeldenummer: 17180942.9
(22) Anmeldetag: 12.07.2017
(51) Int. Cl.: C02F 1/44

(54) **BEUTEL ZUR WASSERREINIGUNG**

(71) Anmelder: Oxyphen AG, 8620 Wetzikon (CH)
(72) Erfinder: HEUSSER-NIEWEG, Annette, 8626 Ottikon (CH)
(74) Vertreter: Clerc, Natalia

(57) **Zusammenfassung**

Ein Beutel zur Wasserreinigung weist eine wasserdichte Hülle (1) auf, welche einen Innenraum definiert. Er weist ferner eine Einlassöffnung (21) in diesen Innenraum und eine Auslassöffnung (31) aus diesem Innenraum auf sowie einen im Innenraum angeordneten Reinigungsfilter zur Reinigung von Wasser. Eine mit der Hülle (1) umlaufend dicht verbundene Wand (40) unterteilt den Innenraum in eine erste Kammer (10) und eine zweite Kammer (11), wobei die erste Kammer (10) ausserhalb der zweiten Kammer (11) liegt und die zweite Kammer (11) ausserhalb der ersten Kammer (10) liegt. Die Einlassöffnung (21) mündet in die erste Kammer (10) und die Auslassöffnung (31) führt aus der zweiten Kammer (11) heraus. Mindestens ein Teil der Wand (40) ist eine mikroporöse Filtermembran (4), welche das Reinigungsfilter zur Reinigung des Wassers bildet. Dieser Beutel lässt sich einfach herstellen und ist, da das Filter durch eine Membran gebildet ist, auch äusserst platzsparend und kostengünstig.

## Beschreibung

### TECHNISCHES GEBIET

Die vorliegende Erfindung betrifft einen Beutel zur Wasserreinigung, insbesondere zwecks Erhalts von Trinkwasser.

### STAND DER TECHNIK

Auf Reisen und im Outdoor-Freizeitbereich werden regelmässig Wasserreinigungsvorrichtungen eingesetzt. Sie weisen üblicherweise einen Behälter auf mit einer Reinigungskartusche, durch welche verschmutztes Wasser durchfliesst und so gereinigt wird.

DE 195 34 454 offenbart einen flexiblen Beutel zur Wasserreinigung mit einer eingesetzten Reinigungskapsel. Dieser soll kostengünstig herstellbar und platzsparend sein. Er besteht jedoch nach wie vor aus mehreren Einzelteilen, wobei die Reinigungskapsel einen nicht zu vernachlässigenden Platzbedarf aufweist.

### DARSTELLUNG DER ERFINDUNG

Es ist eine Aufgabe der Erfindung, eine kostengünstige und platzsparende Vorrichtung zur Wasserreinigung zu schaffen.

Diese Aufgabe löst ein Beutel zur Wasserreinigung mit den Merkmalen des Patenanspruchs 1.

Der erfindungsgemässe Beutel zur Wasserreinigung weist eine wasserdichte Hülle auf, welche einen Innenraum definiert. Ferner weist er eine Einlassöffnung in diesen Innenraum und eine Auslassöffnung aus diesem Innenraum auf sowie einen im Innenraum angeordneten Reinigungsfilter zur Reinigung von Wasser. Erfindungsgemäss unterteilt eine mit der Hülle umlaufend dicht verbundene Wand den Innenraum in eine erste Kammer und eine zweite Kammer, wobei die erste Kammer ausserhalb der zweiten Kammer liegt und die zweite Kammer ausserhalb der ersten Kammer liegt. Die Einlassöffnung mündet in die erste Kammer und die Auslassöffnung führt aus der zweiten Kammer heraus. Mindestens ein Teil der Wand ist eine mikroporöse Filtermembran, welche das Reinigungsfilter zur Reinigung des Wassers bildet.

Die Verwendung einer mikroporösen Filtermembran erübrigt die Verwendung von weiteren Filtermaterialien, insbesondere von Keramikfiltern. Durch die Verwendung der Filtermembran lässt sich der Beutel flach ausbilden und ist somit äusserst platzsparend in der Lagerung und im Transport. Er eignet sich somit optimal für den privaten Outdoorbereich und für Reisen. Da keine aufwändigen Einsätze oder Halterungen für Filterkartuschen und auch keine Filterkartuschen an sich vorgesehen werden müssen, ist auch die Herstellung äusserst einfach und kostengünstig.

Vorzugsweise ist die gesamte Wand als Filtermembran ausgebildet, um eine möglichst grosse Filterfläche anzubieten. In anderen Ausführungsformen besteht die Wand jedoch aus einem wasserdichten Material, vorzugsweise demselben Material wie die Hülle des Beutels, und weist lediglich mindestens ein Fenster auf, welches von der Filtermembran überdeckt ist.

Mikroporöse Filtermembranen weisen einen genügenden Reinigungseffekt auf, um Wasser zu reinigen. Je nach Porengrösse, Porendichte und Dicke der Membran entfernen sie Schwebeteilchen, Mikroorganismen bzw. Bakterien aus dem Wasser, so dass das so gereinigte Wasser zu Hygienezwecken oder auch als Trinkwasser benützt werden kann. Je nach Ausführungsform ist zur weiteren Verbesserung der Wasserqualität unter der Membran noch ein Kompartiment für Ionenaustauscherharz bzw. für gesilberte Aktivkohle angebracht.

Vorzugsweise ist die Filtermembran eine Kapillarporenmembran. Vorzugsweise ist sie eine sogenannte Track-Etched Membran, welche sich durch eine klar definierte Porenstruktur auszeichnet. Üblicherweise werden diese Membranen aus Polyester (PET) oder Polycarbonat (PC) hergestellt und die Poren werden durch Ionenbeschuss und anschliessenden Ätzung erzeugt. Die Poren sind üblicherweise zylinderförmig und verlaufen in unterschiedlichen Winkeln zur Oberfläche durch die Membran.

Beschreibungen derartiger Track-Etched Membranen finden sich beispielsweise in EP 2 604 332 A1, US 5 904 846, US 2003/0159985 A1 und US 2011/0186449 A1.

Vorzugsweise wird eine Track-Etched Filtermembran verwendet, wie sie von der Anmelderin unter dem Namen Unique-Mem® bzw. RoTrac®-Membran vertrieben wird. Die
Unique-Mem® Track-Etched Membran ist aus aus PC (Polycarbonat) oder PET (Polyethylenterephthalat) gefertigt und weist eine Porengrösse zwischen 0.01 µm bis 10 µm und eine Porendichte von 10 x 10E9 bis 1 x 10E5 sowie eine Dicke zwischen 10 bis 60 µm auf.

RoTrac® Membran ist auch aus PC oder PET gefertigt und weist eine Porengrösse zwischen 0.01 µm bis 10 µm und eine Porendichte von 10 x 10E9 bis 1 x 10E5 sowie eine Dicke zwischen 60 und 20 µm auf. Sie verfügt ferner über eine Vliesverstärkung aus PET oder PP (Polypropylen).

Die Filterschicht der Filtermembran lässt sich durch ein wasserdurchlässiges Vlies verstärken. Das Vlies ist vorzugsweise auf der von der zu filtrierenden Flüssigkeit abgewandten Seite angebracht.

In bevorzugten Ausführungsformen ist die Filtermembran unverstärkt und besteht aus einer oder mehreren Filterschichten. In bestimmten Ausführungsformen weist die Filtermembran einen Sandwichaufbau aus zwei oder mehr Filterschichten auf, wobei mindestens zwei der Filterschichten unterschiedliche Filtertypen sind bzw. aus unterschiedlichen Filtermaterialien bestehen. Sie können sich durch Porengrösse, Porendichte, verwendete Art der Materialien oder ihrer generellen Interaktion mit dem verschmutzten Wasser unterscheiden.

Werden Track-Etched Membrane als einzige Schicht oder als Teil eines Sandwichaufbaus verwendet, hat dies den Vorteil, dass diese relativ schnell reissen. D.h. der Benützer kann relativ einfach erkennen, wenn das Filter beschädigt ist und ob somit der Beutel für die Reinigung von Wasser eingesetzt werden kann.

Vorzugsweise weist die Filtermembran eine Porengrösse von annähernd 0.2 - 0.8 µm µm auf. Die Dicke der Membran beträgt vorzugsweise circa 36 µm.

In bevorzugten Ausführungsformen weist die Hülle eine erste Seitenwand und eine zweite Seitenwand auf, wobei die Filtermembran die erste Seitenwand mit der zweiten Seitenwand verbindet und so die erste Kammer von der zweiten Kammer trennt. Dies lässt sich einfach herstellen und benötigt keine zusätzlichen Halterungen oder Vorrichtungen innerhalb des Beutels.

Vorzugsweise verläuft die Wand schräg innerhalb des Innenraums. Dadurch werden die Fläche des Filters und somit seine Effizienz maximiert. Die schräge Anordnung lässt sich beispielsweise erreichen, indem die Wand mit einem ersten Rand auf einer ersten Höhe an der ersten Seitenwand befestigt ist und mit einem zweiten Rand auf einer zweiten Höhe an der zweiten Seitenwand befestigt ist, wobei die erste Höhe ungleich der zweiten Höhe ist.

Vorzugsweise ist der Beutel bzw. die Hülle ein Siegelrandbeutel. Die Wand ist vorzugsweise mit der Hülle verschweisst oder versiegelt.

Vorzugsweise ist die Hülle durchsichtig ausgebildet. Dies hat den Vorteil, dass erstens der Füllstand der ersten und der zweiten Kammer überprüft werden kann. Es hat auch den Vorteil, dass die Intaktheit der Wand und somit der Filtermembran überprüft werden kann.

Vorzugsweise besteht die Hülle aus Kunststoff. Es eignen sich hierzu beispielsweise die bekannten lebensmittelverträglichen Materialien wie Polypropylen (PP) und Polyethylen (PE). Vorzugsweise ist der Beutel flexibel ausgebildet.

In einer einfachen Ausführungsform sind die Einlassöffnung und die Auslassöffnung als einfache Öffnungen in der Hülle ausgebildet oder durch eine Verlängerung des Materials der Hülle geformt. In bevorzugten Ausführungsformen sind jedoch die Einlassöffnung und/oder die Auslassöffnung Teil eines Stutzens. Vorzugsweise sind beide Teil je eines Stutzens. Der Stutzen ist vorzugsweise aus einem steifen oder halbsteifen Kunststoffmaterial gefertigt. Vorzugsweise ist er durch ein Spritzgussteil gebildet, welches in die Hülle eingeklebt, eingeschweisst oder mit dieser versiegelt ist.

Vorzugsweise sind die Einlassöffnung und/oder die Auslassöffnung verschliessbar ausgebildet.

In bevorzugten Ausführungsformen ist der Beutel als Stehbeutel ausgebildet, damit er zumindest im gefüllten Zustand auf einen Boden oder Tisch gestellt werden kann.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:

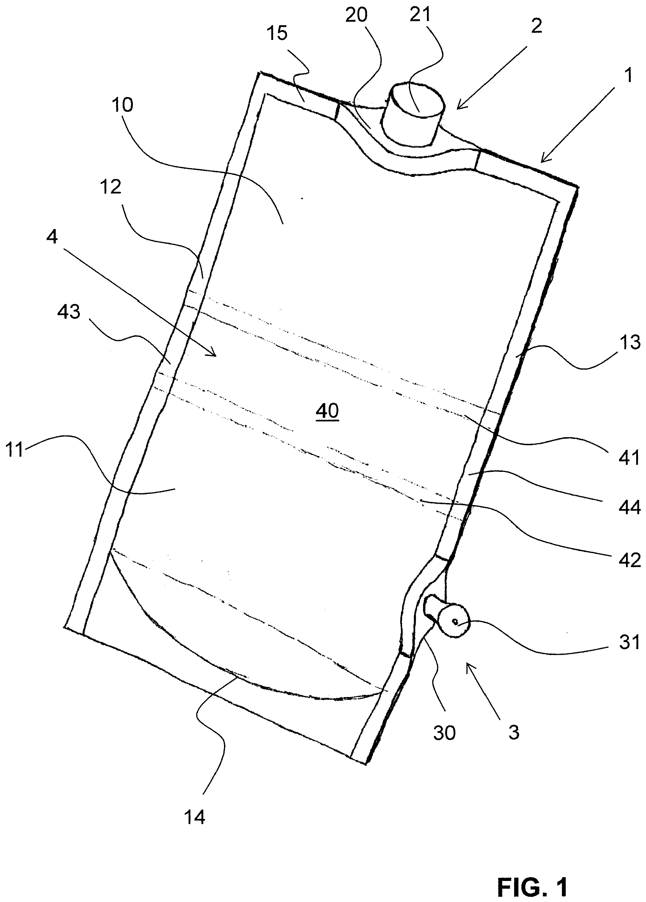

- Figur 1: eine schematische perspektivische Darstellung eines erfindungsgemässen Beutels zur Wasserreinigung;

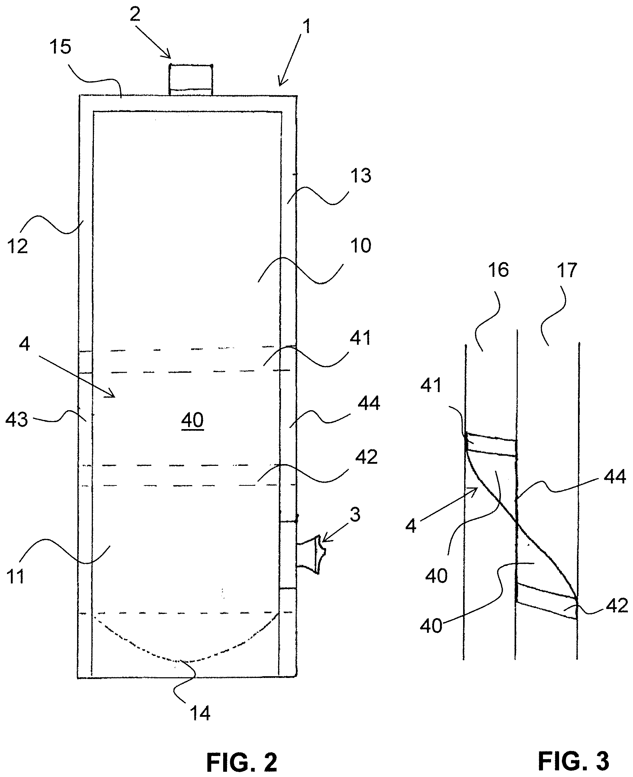

- Figur 2: einen Seitenansicht des Beutels gemäss Figur 1 und
- Figur 3: eine Ansicht eines Teils eines aufgeschnittenen Beutels gemäss Figur 1.

### BESCHREIBUNG BEVORZUGTER AUSFÜHRUNGSFORMEN

Die Figuren zeigen ein bevorzugtes Ausführungsbeispiel eines erfindungsgemässen Beutels. Er ist vorzugsweise als Siegelrandbeutel und als Stehbeutel ausgebildet. Er weist eine wasserdichte Hülle 1 auf, welche vorzugsweise aus einem transparenten Kunststoff gefertigt ist.

Die Hülle 1 umfasst eine erste Seitenwand 16 und eine zweite Seitenwand 17, welche mittels einer ersten seitlichen Siegelnaht 12, einer zweiten seitlichen Siegelnaht 13, einer unteren Siegelnaht 14 sowie einer oberen Siegelnaht 15 verschlossen ist.

Im oberen Bereich ist ein steifer Einlassstutzen 2 mit einem in die obere Siegelnaht integrierten Grundkörper 20 und einer Einlassöffnung 21 vorhanden. Dieser Einlassstutzen 2 ist vorzugsweise verschliessbar ausgebildet, beispielsweise durch einen Drehverschluss oder durch eine aufsteckbare, hier nicht dargestellte Kappe.

Im unteren Bereich des Beutels, hier in der zweiten seitlichen Siegelnaht 13, ist ein steifer Auslassstutzen 3 angeordnet. Auch er weist einen in diese zweite seitliche Siegelnaht 13 integrierten Grundkörper 30 sowie eine Auslassöffnung 31 auf. Auch diese Auslassöffnung 31 ist vorzugsweise verschliessbar, vorzugsweise mit ähnlichen oder gleichen Mitteln wie die Einlassöffnung 21.

Die zwei Stutzen sind vorzugsweise durch Spritzgussteile aus Kunststoff gebildet.

Somit ist die Hülle 1 bis auf die Einlassöffnung 21 und die Auslassöffnung 31 vollständig geschlossen. Die Hülle 1 bildet einen Innenraum, welcher mittels einer Wand 40 in eine obere erste Kammer 10 und eine untere zweite Kammer 11 unterteilt ist.

Die Wand 40 ist durch eine Filtermembran 4 gebildet. Die Filtermembran 4, insbesondere die hierfür verwendeten Materialien und ihre Poreneigenschaften, ist bereits in der obigen Beschreibung der Erfindung bereits näher beschrieben.

Die Filtermembran 4 ist flächig, vorzugsweise rechteckig oder quadratisch ausgebildet. Sie ist über ihren gesamten Umfang mit der Hülle 1 dicht verbunden, insbesondere ist sie verschweisst oder versiegelt.

Vorzugsweise ist die Filtermembran 4 schräg mit der Hülle 1 verbunden. Sie ist entsprechend an der ersten Seitenwand 16 weiter oben, d.h. näher zum oberen Siegelrand 15 und somit näher zur Einlassöffnung angeordnet als sie mit der zweiten Seitenwand 17 verbunden ist. Die entsprechende obere erste Siegelnaht ist in den Figuren mit dem Bezugszeichen 41 versehen, die untere zweite Siegelnaht mit dem Bezugszeichen 42. Eine dritte Siegelnaht 43 ist Teil der ersten seitlichen Siegelnaht 12 der Hülle 1, d.h. die Filtermembran 4 ist zwischen die erste und zweite Seitenwand 16, 17 eingeschoben und gemeinsam mit dieser versiegelt oder verschweisst. Eine vierte Siegelnaht 44 ist Teil der zweiten seitlichen Siegelnaht 13 der Hülle 1, d.h. die Filtermembran 4 ist ebenfalls zwischen die erste und zweite Seitenwand 16, 17 eingeschoben und gemeinsam mit dieser versiegelt oder verschweisst. Anstelle aller erwähnten Siegelnähte lassen sich auch andere geeignete Verbindungsformen wählen, z.B. Verkleben. Die Versiegelung ist jedoch bevorzugt.

Zu reinigendes Wasser gelangt somit über den Einlassstutzen 2 in die obere erste Kammer 10, fliesst durch die Poren der Filtermembran 4 und gelangt als gereinigtes Wasser in die untere zweite Kammer 11. Das gereinigte Wasser kann dann über den Auslassstutzen 3 dem Beutel entnommen werden.

Der erfindungsgemässe Beutel lässt sich einfach herstellen und ist, da das Filter durch eine Membran gebildet ist, auch äusserst platzsparend und kostengünstig.

**BEZUGSZEICHENLISTE**

| | | | |
|---|---|---|---|
| 1 | Hülle | | |
| 10 | erste Kammer | 3 | Auslassstutzen |
| 11 | zweite Kammer | 30 | zweiter Grundkörper |
| 12 | erste seitliche Siegelnaht | 31 | Auslassöffnung |
| 13 | zweite seitliche Siegelnaht | | |
| 14 | Standbereich | 4 | Filtermembran |
| 15 | obere Siegelnaht | 40 | Wand |
| 16 | erste Seitenwand | 41 | erste Siegelnaht |
| 17 | zweite Seitenwand | 42 | zweite Siegelnaht |
| | | 43 | dritte Siegelnaht |
| 2 | Einlassstutzen | 44 | vierte Siegelnaht |
| 20 | erster Grundkörper | | |
| 21 | Einlassöffnung | | |

## Patentansprüche

1. Beutel zur Wasserreinigung mit einer wasserdichten Hülle (1), welche einen Innenraum definiert, mit einer Einlassöffnung (21) in diesen Innenraum und einer Auslassöffnung (31) aus diesem Innenraum und einem im Innenraum angeordneten Reinigungsfilter zur Reinigung von Wasser, **dadurch gekennzeichnet, dass** eine mit der Hülle (1) umlaufend dicht verbundene Wand (40) den Innenraum in eine erste Kammer (10) und eine zweite Kammer (11) unterteilt, wobei die erste Kammer (10) ausserhalb der zweiten Kammer (11) liegt und die zweite Kammer (11) ausserhalb der ersten Kammer (10) liegt, dass die Einlassöffnung (21) in die erste Kammer (10) mündet und die Auslassöffnung (31) aus der zweiten Kammer (11) herausführt und dass mindestens ein Teil der Wand (40) eine mikroporöse Filtermembran (4) ist, welche das Reinigungsfilter zur Reinigung des Wassers bildet.

2. Beutel nach Anspruch 1, wobei die gesamte Wand (40) durch die Filtermembran (4) gebildet ist.

3. Beutel nach einem der Ansprüche 1 oder 2, wobei die Filtermembran (4) eine Kapillarporenmembran, vorzugsweise eine Track-Etched Membran, noch bevorzugter eine Unique-Mem® Track-Etched Membran mit einer Porengrösse von 0.2 µm bis 0.8 µm und einer Dicke von 36 µm eingesetzt.

4. Beutel nach einem der Ansprüche 1 bis 3, wobei die Filtermembran (4) eine Sandwichstruktur aus mindestens zwei unterschiedlichen Filtermaterialien umfasst.

5. Beutel nach einem der Ansprüche 1 bis 4, wobei die Filtermembran (4) eine Porengrösse von annähernd 0.2 µm aufweist.

6. Beutel nach einem der Ansprüche 1 bis 5, wobei die Hülle eine erste Seitenwand (16) und eine zweite Seitenwand (17) aufweist und wobei die Filtermembran (4) die erste Seitenwand (16) mit der zweiten Seitenwand (17) verbindet und so die erste Kammer (10) von der zweiten Kammer (11) trennt.

7. Beutel nach einem der Ansprüche 1 bis 6, wobei die Wand (40) schräg innerhalb des Innenraums verläuft.

8. Beutel nach den Ansprüchen 6 und 7, wobei die Wand (40) mit einem ersten Rand (41) auf einer ersten Höhe an der ersten Seitenwand (16) befestigt ist und mit einem zweiten Rand (42) auf einer zweiten Höhe an der zweiten Seitenwand (17) befestigt ist und wobei die erste Höhe ungleich der zweiten Höhe ist.

9. Beutel nach einem der Ansprüche 1 bis 8, wobei die Hülle (1) ein Siegelrandbeutel ist.

10. Beutel nach einem der Ansprüche 1 bis 9, wobei die Wand (40) mit der Hülle (1) verschweisst oder versiegelt ist.

11. Beutel nach einem der Ansprüche 1 bis 10, wobei die Hülle (1) durchsichtig ist.

12. Beutel nach einem der Ansprüche 1 bis 11, wobei die Hülle (1) aus Kunststoff ist.

13. Beutel nach einem der Ansprüche 1 bis 12, wobei die Einlassöffnung (21) und/oder die Auslassöffnung (31) in einem Stutzen (2, 3) angeordnet ist.

14. Beutel nach Anspruch 13, wobei die Einlassöffnung (21) und/oder die Auslassöffnung (31) verschliessbar ist.

15. Beutel nach einem der Ansprüche 1 bis 14, wobei er als Stehbeutel ausgebildet ist.
